# EUROPÄISCHE PATENTSCHRIFT

(11) **EP 4 509 369 B1**
(45) Veröffentlichungstag und Bekanntmachung des Hinweises auf die Patenterteilung: **06.05.2026**
(21) Anmeldenummer: 23191640.4
(22) Anmeldetag: 16.08.2023
(51) Int. Cl.: B60R 19/34

(54) **CRASHBOX FÜR EINE STOSSFÄNGERANORDNUNG EINES KRAFTFAHRZEUGS SOWIE EINE STOSSFÄNGERANORDNUNG EINES KRAFTFAHRZEUGS MIT ZWEI SOLCHER CRASHBOXEN UND EIN VERFAHREN ZUR HERSTELLUNG EINER SOLCHEN STOSSFÄNGERANORDNUNG**
CRASHBOX FOR A MOTOR VEHICLE BUMPER ASSEMBLY AND A MOTOR VEHICLE BUMPER ASSEMBLY WITH TWO SUCH CRASHBOXES AND A METHOD FOR PRODUCING SUCH A BUMPER ASSEMBLY
BOÎTE À CHOCS POUR UN ENSEMBLE PARE-CHOCS D'UN VÉHICULE AUTOMOBILE AINSI QU'ENSEMBLE PARE-CHOCS D'UN VÉHICULE AUTOMOBILE COMPRENANT DEUX TELLES BOÎTES À CHOCS ET PROCÉDÉ DE FABRICATION D'UN TEL ENSEMBLE PARE-CHOCS

(43) Veröffentlichungstag der Anmeldung: 19.02.2025
(73) Patentinhaber: Benteler Automobiltechnik GmbH, 33102 Paderborn (DE)
(72) Erfinder: Svantesson Kåvik, Tobias, 0854 Oslo (NO)
(74) Vertreter: Ksoll, Peter

(56) Entgegenhaltungen:
- US-A1- 2004 195 862
- US-A1- 2015 108 775
- US-B2- 9 199 591

## Beschreibung

Die Erfindung betrifft eine Crashbox für eine Stoßfängeranordnung eines Kraftfahrzeuges sowie eine Stoßfängeranordnung eines Kraftfahrzeuges mit zwei solcher Crashboxen und ein Verfahren zur Herstellung einer solchen Stoßfängeranordnung.

Crashboxen und Stoßfängeranordnungen finden in der Regel bei allen Kraftfahrzeugen Verwendung und haben die Aufgabe, in einem Crashfall die über die Stoßfängeranordnung eingeleitete Energie in den Crashboxen durch entsprechende Faltung beziehungsweise Deformation der Crashboxen zu absorbieren und überschüssige Energie in den Rahmen beziehungsweise die Fahrzeuglängsträger des Kraftfahrzeuges weiterzuleiten, um so die durch den Crash in das Kraftfahrzeug eingebrachte Energie um die Fahrgastzelle herumzuleiten und Schäden an der Fahrgastzelle zu minimieren und somit das Verletzungsrisiko der Fahrgäste zu reduzieren.

Bei den typischen Tests, die eine Stoßfängeranordnung bestehen muss, damit das Fahrzeug die Versicherungstests besteht, muss die Faltung der Crashboxen entsprechenden Vorgaben entsprechen. Daher ist es wichtig, dass Kraftniveau die maximalen Spitzen beim Falten der Crashboxen abstimmen zu können. Neben der Abstimmung der Profilgeometrie der Wandstärken der Nutzung von Trigger-Prägungen sowie deren Position, Menge und Tiefe, müssen aber weitere Vorkehrungen getroffen werden, um die Faltung und Energieabsorption sowie Energieweiterleitung der Crashboxen zu optimieren.

Insbesondere dürfen die Fügeverbindungen zwischen den Crashboxen und einem Querträger der Stoßfängeranordnung im Crashfall keinen Schaden nehmen und nicht zerstört werden, damit sich die Crashboxen entsprechend den Vorgaben falten und überschüssige Energie in den Rahmen beziehungsweise die Fahrzeuglängsträger des Kraftfahrzeuges weitergeleitet wird.

Aus der Druckschrift WO 2007/121896 A2 ist beispielsweise eine Stoßfängeranordnung mit einer Crashbox bekannt, wobei die dortige Crashbox zu einem Mittelbereich eines Querträger der dortigen Stoßfängeranordnung hingebogen und mit dem dortigen Querträger verschraubt ist. Allerdings erfahren bei dieser Stoßfängeranordnung die Verschraubungen der Crashbox mit dem Querträger im Crashfall, bei dem die Hauptkraft zwischen den beiden Crashboxen in den Querträger der Stoßfängeranordnung eingebracht wird, eine extrem hohe Belastung, sodass die Gefahr besteht, dass die Verschraubungen im Crashfall Schaden nehmen und gegebenenfalls sogar gänzlich zerstört werden und somit eine Faltung der Crashbox entsprechend den Vorgaben nicht mehr gewährleistet werden kann. In der Folge ist auch eine gezielte Weiterleitung von Crashenergie in den Fahrzeugrahmen um die Fahrgastzelle herum nicht mehr sichergestellt. Hierdurch kann sich das Verletzungsrisiko für Personen in der Fahrgastzelle deutlich erhöhen.

Weiterhin ist aus der WO 94/27841 A1 eine Stoßfängeranordnung bekannt, bei der die Kontaktfläche zwischen einer Crashbox und einem Querträger der Stoßfängeranordnung im Fügebereich reduziert wird. Auch hier erfahren die Fügebereiche im Crashfall, bei dem die Hauptkraft zwischen den beiden Crashboxen in den Querträger der Stoßfängeranordnung eingebracht wird, extrem hohe Belastungen, die zu Schäden in den und gegebenenfalls zur Zerstörung der Fügeverbindungen führen können. In der Folge ist auch bei dieser Stoßfängeranordnung eine gezielte Weiterleitung von Crashenergie in den Fahrzeugrahmen um die Fahrgastzelle herum nicht mehr sichergestellt. Hierdurch kann sich wiederum das Verletzungsrisiko für Personen in der Fahrgastzelle deutlich erhöhen.

Ferner zeigt die EP 0 894 675 A1 eine Stoßfängeranordnung mit einer aus einem Einkammerprofil bestehenden Crashbox. Dabei sind eine Innenwand und eine Außenwand der Crashbox von dieser weg gebogen und mit einem Querträger der Stoßfängeranordnung ebenso gefügt, wie eine Unterwand und eine Oberwand der Crashbox. Auch hier erfahren die Fügebereiche im Crashfall, bei dem die Hauptkraft zwischen den beiden Crashboxen in den Querträger der Stoßfängeranordnung eingebracht wird, hohe Belastungen, die zwar über einen größeren Bereich des Querträgers verteilt sind aber trotzdem auch zu Schäden in den und gegebenenfalls zur Zerstörung der Fügeverbindungen führen können. Insbesondere auch deshalb, da das Faltverhalten der zum Querträger geöffneten Hohlkammer der Crashbox deutlich ungünstiger und weniger vorhersehbar ist. In der Folge ist auch bei dieser Stoßfängeranordnung eine gezielte Weiterleitung von Crashenergie in den Fahrzeugrahmen um die Fahrgastzelle herum nicht mehr sichergestellt. Hierdurch kann sich auch bei dieser Stoßfängeranordnung wiederum das Verletzungsrisiko für Personen in der Fahrgastzelle deutlich erhöhen.

Die US 2015/108775 A1 offenbart eine Crashbox mit polygonalem Querschnitt, welche zwischen einem Bumperträger und einer Fahrzeugkarosserie so angeordnet ist, dass ihre Achsrichtung der Längsrichtung des Fahrzeugs entspricht. Sie besitzt äußere und innere Seitenwände, die zur Energieabsorption beim Aufprall balgartig zusammengedrückt werden, wobei die äußere Wand stärker geneigt ist als die innere.

Es besteht daher weiterhin ein erhöhter Bedarf die Fügeverbindungen zwischen den Crashboxen und dem Querträger einer Stoßfängeranordnung widerstandsfähiger gegen eine Zerstörung im Crashfall zu machen, bei dem die Hauptkraft zwischen den beiden Crashboxen in den Querträger der Stoßfängeranordnung eingebracht wird. Insbesondere Schweißverbindungen soll vermieden werden, dass innerhalb der Schweißverbindungen oder dessen Wärmeeinflusszonen im Crashfall Risse auftreten, die zu einem Versagen des Crashmanagementsystems der Stoßfängeranordnung führen.

Es ist daher Aufgabe der Erfindung, eine Crashbox für eine Stoßfängeranordnung eines Kraftfahrzeuges zur Verfügung zu stellen, bei der die Faltung im Crashfall, bei dem die Hauptkraft zwischen den beiden Crashboxen in den Querträger der Stoßfängeranordnung eingebracht wird, sowie die Energieweiterleitung in den Kraftfahrzeugrahmen nochmals optimiert und verbessert ist, wobei eine Versagenswahrscheinlichkeit des Crashmanagementsystems beziehungsweise der Stoßfängeranordnung und eine Zerstörungswahrscheinlichkeit der Fügeverbindung zwischen den Crashboxen und dem Querträger einer Stoßfängeranordnung gegenüber dem Stand der Technik deutlich miniert wird. Ferner ist es Aufgabe der Erfindung, eine entsprechende Stoßfängeranordnung mit solchen Crashboxen und ein Verfahren zur Herstellung einer solchen Stoßfängeranordnung zur Verfügung zu stellen.

Hinsichtlich der Crashbox wird diese Aufgabe gelöst durch eine Crashbox mit allen Merkmalen des Patentanspruchs 1. Hinsichtlich der Stoßfängeranordnung wird diese Aufgabe gelöst durch ein Stoßfängeranordnung mit allen Merkmalen des Patentanspruchs 11. Bezüglich des Verfahrens zur Herstellung einer Stoßfängeranordnung wird diese Aufgabe gelöst durch ein Verfahren mit allen Merkmalen des Patentanspruchs 15. Vorteilhafte Ausgestaltungen der Erfindung finden sich in den Unteransprüchen.

Die erfindungsgemäße Crashbox für eine Stoßfängeranordnung eines Kraftfahrzeuges zeichnet sich dadurch aus, dass die Crashbox wenigstens eine äußere Hohlkammer und wenigstens eine innere Hohlkammer und einen fahrzeugseitigen Endabschnitt und einen stoßfängerseitigen Frontabschnitt aufweist, wobei im fahrzeugseitigen Endabschnitt die wenigstens eine äußere Hohlkammer mit der wenigstens einen inneren Hohlkammer verbunden ist und ein geschlossenes Mehrkammerprofil bildet, während im stoßfängerseitigen Frontabschnitt die wenigstens eine äußere Hohlkammer von der wenigstens einen inneren Hohlkammer getrennt und beabstandet ist.

Durch die erfindungsgemäße Ausgestaltung der Crashbox wird erreicht, dass die Fügeverbindung sowohl der wenigstens einen äußeren Hohlkammer als auch der wenigstens einen inneren Hohlkammer im Crashfall, bei dem die Hauptkraft zwischen den beiden Crashboxen in den Querträger der Stoßfängeranordnung eingebracht wird, deutlich weniger belastet wird als bei den aus dem Stand der Technik bekannten Crashboxen. Daraus resultiert, dass das Risiko eines Versagens des Crashmanagementsystems einer Stoßfängeranordnung und der Zerstörung der Fügeverbindungen deutlich minimiert wird, da die wenigstens eine äußere und die wenigstens eine innere Hohlkammer aufgrund ihrer Trennung und Beabstandung im Frontabschnitt unabhängig voneinander belasten werden und somit unabhängige Energieableitungspfade bestehen. Durch diese unterschiedlichen Energieableitungspfade kann auch eine noch gezieltere Faltung der Crashbox in einem solchen Crashfall und Einleitung überschüssiger Crashenergie in die Fahrzeugkarosserie um die Fahrgastzelle herum erreicht werden. Daraus folgt, dass durch die erfindungsgemäße Crashbox die Sicherheit von Personen innerhalb der Fahrgastzelle deutlich erhöht ist, da das Risiko eines Versagens des Crashmanagementsystems und eines unkontrollierten Kollabierens der Stoßfängeranordnung deutlich minimiert ist. Besonders effektiv ist eine derartige erfindungsgemäße Crashbox, wenn als Fügeverbindungen Schweißverbindungen eingesetzt werden, da dabei eine großflächige stoffschlüssige Verbindung zwischen Querträger und Crashbox erreicht wird, wodurch die gezielte Faltung der Crashbox in einem solchen Crashfall und die Einleitung überschüssiger Crashenergie in die Fahrzeugkarosserie um die Fahrgastzelle herum besonders gut berechenbar und vorhersehbar ist.

Dabei kann es nach einer ersten vorteilhaften Ausgestaltung zwei alternative Ausführungsformen geben. Zum einen kann im fahrzeugseitigen Endabschnitt die wenigstens eine äußere Hohlkammer in einer horizontalen Richtung mit der wenigstens einen inneren Hohlkammer verbunden sein und ein geschlossenes Mehrkammerprofil bilden, während im stoßfängerseitigen Frontabschnitt die wenigstens eine äußere Hohlkammer von der wenigstens einen inneren Hohlkammer in der horizontalen Richtung getrennt und beabstandet ist. Zum anderen kann im fahrzeugseitigen Endabschnitt die wenigstens eine äußere Hohlkammer in einer vertikalen Richtung mit der wenigstens einen inneren Hohlkammer verbunden sein und ein geschlossenes Mehrkammerprofil bilden, während im stoßfängerseitigen Frontabschnitt die wenigstens eine äußere Hohlkammer von der wenigstens einen inneren Hohlkammer in der horizontalen Richtung getrennt und beabstandet ist

Dabei ist nach einer weiteren vorteilhaften Ausgestaltung der Erfindung sowohl die wenigstens eine innere als auch die wenigstens eine äußere Hohlkammer über ihre gesamte Längserstreckung von einem stoßfängerseitigen Ende bis zu einem fahrzeugseitigen Ende geschlossen ausgebildet. Derart geschlossene Hohlprofile weisen eine besonders gute und vorhersagbare Falteigenschaft in einem Crashfall auf und können die überschüssige Crashenergie besonders gut in die Fahrzeugkarosserie um die Fahrgastzelle herum einleiten. Deshalb trägt die erfindungsgemäße Crashbox zu einer erhöhten Sicherheit der Personen innerhalb der Fahrgastzelle des Kraftfahrzeugs bei.

Alternativ ist auch möglich, dass die wenigstens eine äußere Hohlkammer oder die wenigstens eine innere Hohlkammer über ihre Längserstreckung im Frontabschnitt offen, insbesondere als offenes C-Profil, ausgebildet sind. Auch in einer solchen Ausgestaltung der Crashbox ist eine besonders gute und vorhersagbare Falteigenschaft der Crashbox gegebenen, sodass auch eine derartige Crashbox überschüssige Crashenergie besonders gut in die Fahrzeugkarosserie um die Fahrgastzelle herum einleiten. Dies gilt insbesondere dann, wenn die wenigstens eine äußere Hohlkammer oder die wenigstens eine innere Hohlkammer über ihre Längserstreckung im Frontabschnitt zur jeweils wenigstens einen anderen Hohlkammer offen ausgebildet ist. Auch eine derartige Ausgestaltung der Crashbox trägt daher zu einer erhöhten Sicherheit der Personen innerhalb der Fahrgastzelle des Kraftfahrzeugs bei.

Nach einer besonders vorteilhaften Ausgestaltung der erfindungsgemäßen Crashbox weist die wenigstens eine äußere Hohlkammer im Frontabschnitt eine Längsachse auf, welche zu einer Längsachse der wenigstens einen inneren Hohlkammer einen Winkel α kleiner 40° bildet, wobei der Winkel α vorzugsweise größer 3° ausgebildet ist. Durch diese Ausgestaltung der erfindungsgemäßen Crashbox werden die wenigstens eine innere und die wenigstens eine äußere Hohlkammer im Frontabschnitt immer weiter voneinander beabstandet, wobei der Abstand linear anwächst, je weiter man sich dem stoßfängerseitigen Ende der Crashbox nähert. Hierdurch wird die Crashbox in ihrem Fügebereich zum Querträger deutlich verbreitert. Dies hat zur Folge, dass sich die Kraft auf die Fügeverbindungen und insbesondere bei Verwendung von Schweißverbindungen auf die Schweißnähte deutlich reduzieren. Daher ist durch diese Ausgestaltung der erfindungsgemäßen Crashbox einem unkontrollierten Kollabieren des Crashmanagementsystems beziehungsweise einer Zerstörung der Fügeverbindungen zwischen Crashbox und Querträger im Falle eines Crashs, bei dem die Hauptkraft zwischen den beiden Crashboxen in den Querträger der Stoßfängeranordnung eingebracht wird, vorgebeugt, was wiederum die Sicherheit von Personen innerhalb der Fahrgastzellen eines Kraftfahrzeugs mit solchen Crashboxen erhöht.

Dabei kann es alternativ auch vorgesehen sein, dass im Frontabschnitt die wenigstens eine äußere Hohlkammer und die wenigstens eine innere Hohlkammer einen zum stoßfängerseitigen Ende kontinuierlich wachsenden Abstand aufweisen, ohne das entsprechende Längsachsen einen konstanten Winkel bildender Hohlkammern existieren. Insbesondere können die wenigstens eine innere und/oder die wenigstens eine äußere Hohlkammer im Frontbereich entsprechend gebogen sein. Dabei können dies Biegungen vielfältige Formen aufweisen, sodass sowohl ein Biegeradius als auch eine kontinuierlich größer werdende Biegung gegeben sein kann. Auch ist es möglich, dass die Biegung in ihrem Verlauf die Richtung ändert. Auch durch eine derartige Ausgestaltung der erfindungsgemäßen Crashbox werden die wenigstens eine innere und die wenigstens eine äußere Hohlkammer im Frontabschnitt immer weiter voneinander beabstandet, wobei allerdings kein lineares Anwachsen des Abstands der Hohlkammern stattfindet, je weiter man sich dem stoßfängerseitigen Ende der Crashbox nähert. Allerdings wird auch hier die Crashbox in ihrem Fügebereich zum Querträger deutlich verbreitert. Dies hat auch hier zur Folge, dass sich die Kraft auf die Fügeverbindungen und insbesondere bei Verwendung von Schweißverbindungen auf die Schweißnähte deutlich reduzieren. Daher ist auch durch diese Ausgestaltung der erfindungsgemäßen Crashbox einem unkontrollierten Kollabieren des Crashmanagementsystems beziehungsweise einer Zerstörung der Fügeverbindungen zwischen Crashbox und Querträger im Falle eines Crashs, bei dem die Hauptkraft zwischen den beiden Crashboxen in den Querträger der Stoßfängeranordnung eingebracht wird, vorgebeugt, was wiederum die Sicherheit von Personen innerhalb der Fahrgastzellen eines Kraftfahrzeugs mit solchen Crashboxen erhöht.

Dabei hat es sich als besonders vorteilhaft erwiesen, wenn sich der Frontabschnitt über 1/5 bis 2/3 der Gesamtlänge der Crashbox erstreckt. Durch eine solche Ausgestaltung der Crashbox wird ein besonders gutes Crashmanagement der Stoßfängeranordnung erzielt. Hierdurch wird eine besonders gute und vorhersagbare Falteigenschaft in einem Crashfall erreicht und überschüssige Crashenergie wird besonders gut in die Fahrzeugkarosserie um die Fahrgastzelle herum eingeleitet. Deshalb trägt diese Ausgestaltung der erfindungsgemäße Crashbox zu einer erhöhten Sicherheit der Personen innerhalb der Fahrgastzelle des Kraftfahrzeugs bei.

Um im Frontbereich das Trennen und Beabstanden der wenigstens einen inneren und wenigsten einen äußeren Hohlkammer zu realisieren, ist im Frontabschnitt die wenigstens eine äußere Hohlkammer von der wenigstens einen inneren Hohlkammer durch einen Schlitz beabstandet, welcher vorzugsweise zum Endabschnitt abgerundet, insbesondere durch einen Radius abgerundet ausgebildet ist, wobei dieser Radius mindestens der Wanddicke der Hohlkammern im Endabschnitt entspricht. Die Einbringung eines solchen Schlitzes ist insbesondere werkzeugtechnisch besonders einfach und effektiv zu realisieren, indem Fräswerkzeuge oder Stanzwerkzeuge verwendet werden. Insbesondere lassen sich mit derartigen Bearbeitungstechniken beziehungsweise Bearbeitungswerkzeugen zum Endabschnitt hin entsprechende Abrundungen beziehungsweise Radien einfach und genau erzeugen.

Alternativ ist es möglich, dass im Frontabschnitt zwischen der inneren und äußeren Hohlkammer innerhalb des Schlitzes eine weitere Hohlkammer angeordnet ist, sodass zwischen innerer Hohlkammer und weiterer Hohlkammer sowie weiterer Hohlkammer und äußerer Hohlkammer separate Schlitze angeordnet sind.

Erfindungsgemäß weisen die wenigstens eine äußere Hohlkammer und die wenigstens eine innere Hohlkammer im Endabschnitt jeweils eine Trennwand auf, welche die wenigstens eine äußere Hohlkammer und die wenigstens eine innere Hohlkammer innenseitig begrenzen, wobei diese Trennwände vorzugsweise voneinander beabstandet sind und mit einem die wenigstens eine äußere Hohlkammer und die wenigstens eine innere Hohlkammer verbindenden oberen Steg und unteren Steg eine weitere Hohlkammer im Endbereich bilden. Eine derartige Crashbox kann in einfacher Weise aus einem Mehrkammerhohlprofile hergestellt werden, bei dem zwischen der wenigstens einen äußeren und der wenigstens einen inneren Hohlkammer die weitere Hohlkammer angeordnet ist. Hierzu wird einfach im Frontbereich des Mehrkammerhohlprofils zwischen der wenigstens einen äußeren und der wenigstens einen inneren Hohlkammer in der weiteren Hohlkammer ein Schlitz eingebracht. Hierdurch entsteht eine Crashbox die im Frontbereich geschlossene innere und äußere Hohlkammern aufweist. Der Anbindungsbereich der Crashbox zum Querträger kann nachfolgend noch beispielsweise durch Biegen oder Abknicken der geschlossenen inneren und/oder äußeren Hohlkammern verbreitert werden.

Um eine besonders gute Einleitung von überschüssiger Crashenergie zu erreichen und um die Falteigenschaften der Crashbox zu optimieren, weisen die Hohlkammern im Frontabschnitt und/oder im Endabschnitt innenseitig und/oder außenseitig Solldeformationsstellen auf.

In die gleiche Richtung zielt die Ausgestaltung der Erfindung, wonach im Frontabschnitt an den Hohlkammern Stege, insbesondere über die gesamte Längserstreckung des Frontabschnitts ausgebildete Stege, angeordnet sind, in welche Sicken als Deformationselemente angeordnet sind, wobei sich diese Sicken vorzugsweise in die Trennwände sowie obere und/oder unter Begrenzungswände der Hohlkammern fortsetzen.

Nach einer weiteren vorteilhaften Ausgestaltung der erfindungsgemäßen Crashbox weisen die Hohlkammern über Ihre gesamte Längserstreckung vom fahrzeugseitigen Ende bis zum stoßfängerseitigen Ende jede für sich eine konstante Breite von mindestens 20mm auf. Durch die konstante Breite lässt sich des Crashmanagement besonders gut gestalten, da dadurch die Faltung der Crashbox und die Einleitung von überschüssiger Crashenergie in die Fahrzeugkarosserie um die Fahrgastzelle herum besonders vorhersagbar beziehungsweiseberechenbar ist.

Die erfindungsgemäße Stoßfängeranordnung eines Kraftfahrzeuges weist zwei zuvor beschriebene Crashboxen auf, die über wenigstens einen Querträger miteinander verbunden sind. Mit einer solchen Stoßfängeranordnung kann ein besonders gutes Crashmanagement realisiert werden, bei dem die Faltung der Crashbox und die Einleitung von überschüssiger Crashenergie in die Fahrzeugkarosserie um die Fahrgastzelle herum besonders vorhersagbar beziehungsweise berechenbar ist, wodurch die Sicherheit von Personen in der Fahrgastzelle deutlich erhöht ist.

Auch wenn bisher von innerer und äußerer Hohlkammer der Crashbox gesprochen wird, welche Richtungsangaben auf die Einbaulage und das Kraftfahrzeugkoordinatensystem (X, Y, Z) zu verstehen ist, so ist es im Rahmen der Erfindung auch möglich, die Crashbox in die Fahrzeuglängsachse (X) um 90° gedreht eingebaut zu verwenden, so dass die inneren und/oder äußeren Hohlkammern anstelle zu den Fahrzeugseiten in Fahrzeughochrichtung geneigt sind.

Daher kann eine erfindungsgemäße Stoßfängeranordnung alternativ derart ausgebildet sein, dass
a) die wenigstens eine äußere Hohlkammer näher an einem Ende des wenigstens einen Querträger angeordnet ist als die wenigstens eine innere Hohlkammer oder
b) die wenigstens eine äußere Hohlkammer der Crashboxen oberhalb der wenigstens einen inneren Hohlkammer angeordnet ist.

Nach einer weiteren vorteilhaften Ausgestaltung der Erfindung weist der wenigstens eine Querträger eine Höhe auf, die größer ist als eine Querschnittshöhe des Fahrzeugendabschnitts der Crashboxen, wobei die wenigstens eine äußere Hohlkammer der Crashboxen oberhalb der wenigstens einen inneren Hohlkammer angeordnet ist und sich an einem oberen Befestigungsbereich des wenigstens einen Querträgers abstützt, während die wenigstens eine innere Hohlkammer sich an einen unteren Befestigungsbereich des wenigstens einen Querträgers abstützt.

Dabei hat es sich als vorteilhaft erwiesen, dass die Crashboxen mit dem Querträger gefügt, vorzugsweise verschraubt oder stoffschlüssig gefügt, insbesondere verschweißt sind. Derartige Fügeverbindungen lassen sich einfach und unter ökonomischen Gesichtspunkten vorteilhaft herstellen.

Weiterhin vorteilhaft ist, dass die Crashboxen mit ihrem Endabschnitt mit dem Kraftfahrzeug, insbesondere mit einem Längsträger des Kraftfahrzeugs fügbar, insbesondere verschweißbar oder verschraubbar, insbesondere über Flanschplatten miteinander verschraubbar, ausgebildet sind. Auch derartige Fügeverbindungen lassen sich einfach und unter ökonomischen Gesichtspunkten vorteilhaft herstellen.

Das erfindungsgemäße Verfahren zur Herstellung einer zuvor beschriebenen Stoßfängeranordnung mit zwei zuvor beschriebenen Crashboxen weist folgende Verfahrensschritten auf:
a) Bereitstellen von zwei Mehrkammerhohlprofilen mit wenigstens einer äußeren Hohlkammer und wenigstens einer inneren Hohlkammer,
b) Einbringen eines Schlitzes in einen Frontabschnitt der Mehrkammerhohlprofile zur Trennung und Beabstandung der wenigstens einen äußeren Hohlkammer von der wenigstens einer inneren Hohlkammer und Herstellung zweier Crashboxen,
c) Bereitstellung von zwei Crashboxen
d) Fügen der beiden Crashboxen mit dem wenigstens einen Querträger.

Das Fügen kann dabei mit verschiedenen Fügeverfahren, wie beispielsweise Verschrauben und insbesondere Verschweißen erfolgen. Dabei gibt es mehrere Möglichkeiten des Verbindens von Querträger und Crashboxen. Zum einen können die wenigstens eine innere und eine äußere Hohlkammer überlappende Frontbereiche aufweisen, mit denen die Crashboxen den Querträger oben und unten umgreifen und mit denen die Crashboxen mit dem Querträger der Stoßfängeranordnung gefügt, insbesondere verschraubt und/oder verschweißt werden können. Zum anderen können die wenigstens eine innere und eine äußere Hohlkammer direkt mit dem Querträger verschweißt werden. Dabei ist es zum einen möglich diese direkt mit der Rückwand des Querträgers zu verschweißen. Zum anderen kann die Rückwand des Querträgers auch Durchbrüche aufweisen, durch welche die wenigstens eine innere und eine äußere Hohlkammer hindurchgesteckt werden können, um anschließend mit der Vorderwand des Querträgers verschweißt zu werden.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Es zeigen:
- Figur 1:: ein erstes Ausführungsbeispiel einer erfindungsgemäßen Crashbox in einer Draufsicht von unten,
- Figur 2:: das Ausführungsbeispiel der Figur eine in einer perspektivischen Ansicht auf das stoßfängerseitige Ende der Crashbox,
- Figur 3:: ein Ausführungsbeispiel einer erfindungsgemäße Stoßfängeranordnung in einer perspektivischen Ansicht auf ihr eines Ende, in dem sie mit einer Crashbox der Figuren 1 und 2 gefügt ist,
- Figur 4:: ein weiteres Ausführungsbeispiel einer erfindungsgemäße Stoßfängeranordnung in einer Ansicht von oben auf ihr eines Ende, in dem sie mit einer erfindungsgemäßen Crashbox gefügt ist,
- Figur 5a:: eine Querschnittdarstellung eines Frontabschnitts eines Ausführungsbeispiels einer erfindungsgemäßen Crashbox,
- Figur 5b:: eine Querschnittdarstellung eines Endabschnitts des Ausführungsbeispiels der Crashbox der Figur 5a,
- Figur 6a:: eine Querschnittdarstellung eines Frontabschnitts eines Ausführungsbeispiels der Crashbox,
- Figur 6b:: eine Querschnittdarstellung eines Endabschnitts des Ausführungsbeispiels der der Crashbox der Figuren 1 und 2 beziehungsweise der Crashbox der Figur 5a,
- Figur 7a:: eine Querschnittdarstellung eines Frontabschnitts eines weiteren Ausführungsbeispiels einer erfindungsgemäßen Crashbox,
- Figur 7b:: eine Querschnittdarstellung eines Endabschnitts des Ausführungsbeispiels der Crashbox der Figur 7a,
- Figur 8:: ein Ausführungsbeispiel einer erfindungsgemäße Stoßfängeranordnung in einer Ansicht von oben auf ihr eines Ende zu Beginn eines Center-Pole-Aufpralls zwischen den beiden Crashboxen der Stoßfängeranordnung,
- Figur 9:: das Ausführungsbeispiel einer erfindungsgemäße Stoßfängeranordnung der Figur 8 in einer Ansicht von oben auf ihr eines Ende während eines Center-Pole-Aufpralls zwischen den beiden Crashboxen der Stoßfängeranordnung,
- Figur 10:: ein weiteres Ausführungsbeispiel einer erfindungsgemäßen Crashbox in einer Draufsicht von einer Seite und
- Figur 11:: ein Ausführungsbeispiel einer erfindungsgemäßen Stoßfängeranordnung.

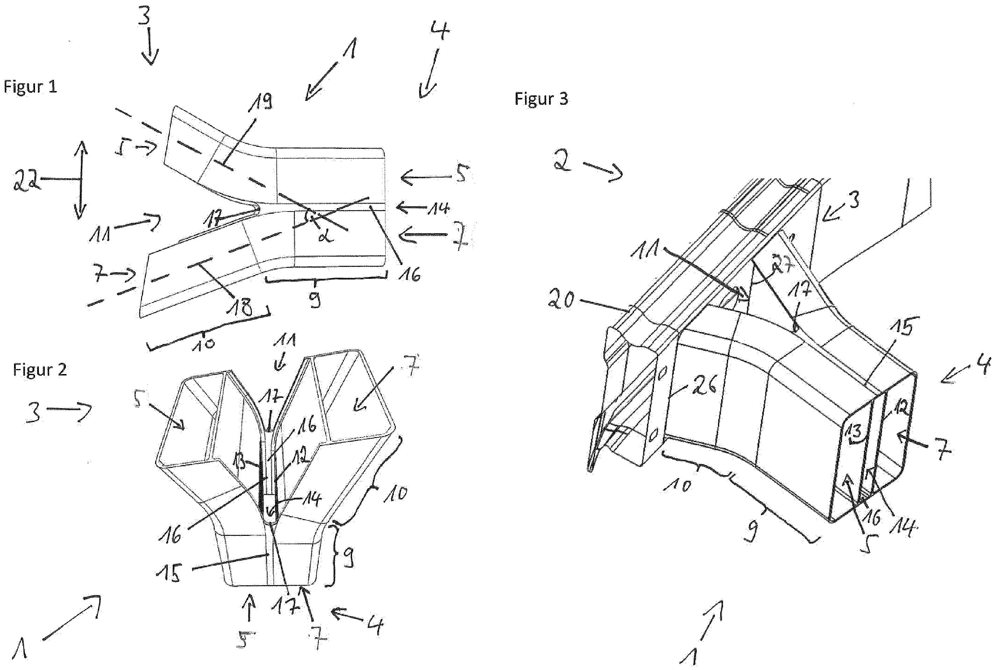

Die Figur 1 zeigt ein erstes Ausführungsbeispiel einer erfindungsgemäßen Crashbox 1 in einer Draufsicht von unten. Wie darin zu erkennen ist, umfasst die Crashbox 1 eine äußere Hohlkammer 5 und eine innere Hohlkammer 7, welche sich von einem fahrzeugseitigen Ende 4 zu einem stoßfängerseitigen Ende 3 erstrecken. Dabei sind die beiden Hohlkammern 5 und 7 in einem fahrzeugseitigen Endabschnitt 9 mittels eines unteren Steges 16 verbunden.

An dem zum stoßfängerseitigen Ende 3 weisenden Ende des unteren Steges 16 weist dieser zu seinem Abschluss einen Radius 17 auf. Ab hier sind die beiden Hohlkammern 5 und 7 durch einen Schlitz in horizontaler Richtung 22 in einem stoßfängerseitigen Frontabschnitt 10 voneinander getrennt und beabstandet. Der Schlitz 11 wird dabei von seinem zum fahrzeugseitigen Ende 4 der Crashbox 1 hinweisenden Ende am Radius 17 des Steges 16 zum stoßfängerseitigen Ende 3 hin kontinuierlich größer. Die beiden Hohlkammern 5 und 7 sind in dem Frontabschnitt 10 somit abgewinkelt zueinander ausgebildet, wobei eine Längsachse 18 der inneren Hohlkammer 7 mit einer Längsachse 19 der äußeren Hohlkammer 5 einen Winkel α von ca. 40° bildet.

In der Figur 1 ist weiterhin eine weitere Hohlkammer 14 angezogen, die im fahrzeugseitigen Endabschnitt 9 zwischen der inneren Hohlkammer 7 und der äußeren Hohlkammer 5 angeordnet ist und durch den unteren Steg 16 und einem in der Figur 2, welche eine perspektivische Ansicht auf das stoßfängerseitige Ende der Crashbox 1 von oben darstellt, sichtbaren oberen Steg 15 sowie Trennwände 12 und 13 gebildet ist. Die Trennwände 12 und 13 bilden dabei die innere Wand der beiden Hohlkammern 5 und 7 im fahrzeugseitigen Endbereich 9.

Aus der Darstellung der Figur 2 ist auch erkennbar, dass sowohl die innere Hohlkammer 7 als auch die äußere Hohlkammer 5 über ihre gesamte Längserstreckung als geschlossene Hohlkammern 5 und 7 ausgebildet sind. Die Crashbox 1 kann nunmehr am stoßfängerseitigen Ende 3 über die innere Crashbox 7 und die äußere Crashbox 5 mit einem Querträger einer Stoßfängeranordnung gefügt, vorzugsweise verschweißt werden. Am fahrzeugseitigen Ende 4 kann die gesamte Crashbox 1 mit der Karosserie eines Kraftfahrzeuges, vorzugsweise einem Längsträger des Kraftfahrzeuges ebenfalls gefügt, insbesondere verschweißt werden.

In der Figur 3 ist nunmehr die Crashbox 1 der Figuren 1 und 2 in einem Ausführungsbeispiel einer erfindungsgemäße Stoßfängeranordnung in einer perspektivischen Ansicht auf ihr eines Ende gezeigt, in der sie schon mit einer Stoßfängeranordnung 2 eines Kraftfahrzeuges gefügt ist. Das Fügen erfolgte hierbei mittels einer Schweißverbindung, durch die zwischen einem Querträger 20 der Stoßfängeranordnung 2 und der äußeren Hohlkammer 5 im stoßfängerseitigen Frontabschnitt 10 eine Schweißnaht 26 gebildet ist. Die Schweißnaht 26 ist hier nur in einem äußeren Bereich angezeigt, verläuft aber vorzugsweise über den gesamten geschlossenen Bereich der Hohlkammer 5 zum Querträger 20 hin, sodass der Querträger 20 und die Hohlkammer 5 über den gesamten Umfang der Hohlkammer 5 stoffschlüssig miteinander verbunden sind.

In gleicher Weise ist die innere Hohlkammer 7 im Frontabschnitt 10 mit dem Querträger 20 der Stoßfängeranordnung 2 gefügt, insbesondere verschweißt, wobei auch hier eine stoffschlüssige Verbindung über den gesamten Umfang der Hohlkammer 7 durch eine Schweißnaht 27 zwischen dem Querträger 20 und der Hohlkammer 7 gegeben ist.

In der Figur 3 ist nunmehr auch deutlich zu erkennen, dass im gefügten Zustand der erfindungsgemäßen Stoßfängeranordnung 2 die Crashbox 1 derart ausgebildet ist, dass die beiden Hohlkammern 5 und 7 im Frontbereich 10 durch den Schlitz 11 voneinander beabstandet sind, wobei der Schlitz 11 sich zum Querträger 20 der Stoßfängeranordnung 2 kontinuierlich vergrößert. Hierdurch ist der gesamte Angriffsbereich der Crashbox 1 an den Querträger 20 der Stoßfängeranordnung 2deutlich verbreitert, sodass im Crashfall eingebrachte Energie über einen deutlich vergrößerten Bereich über den Querträger 20 in die Crashbox 1 eingebracht wir, wodurch eine deutlich günstigere Kräfteverteilung erreicht ist.

Weiterhin ist in Figur 3 auch die weitere Hohlkammer 14 zwischen der inneren Hohlkammer 7 und der äußeren Hohlkammer 5 zu erkennen, welche durch die innere Trennwand 12 der inneren Hohlkammer 7 sowie der inneren Trennwand 13 der äußeren Hohlkammer 5 sowie dem oberen Steg 15 und dem unteren Steg 16, welche die innere Hohlkammer 7 mit der äußeren Hohlkammer 5 verbinden, gebildet ist.

Ferner ist deutlich der Radius 17 des oberen Steges 15 an seinem stoßfängerseitigen Ende 3 zu erkennen. Durch die Ausbildung dieses Radius ist im Crashfall eine bessere Krafteinleitung in die Karosserie des Fahrzeuges und eine gezieltere Faltung des Querträgers 1 ermöglicht.

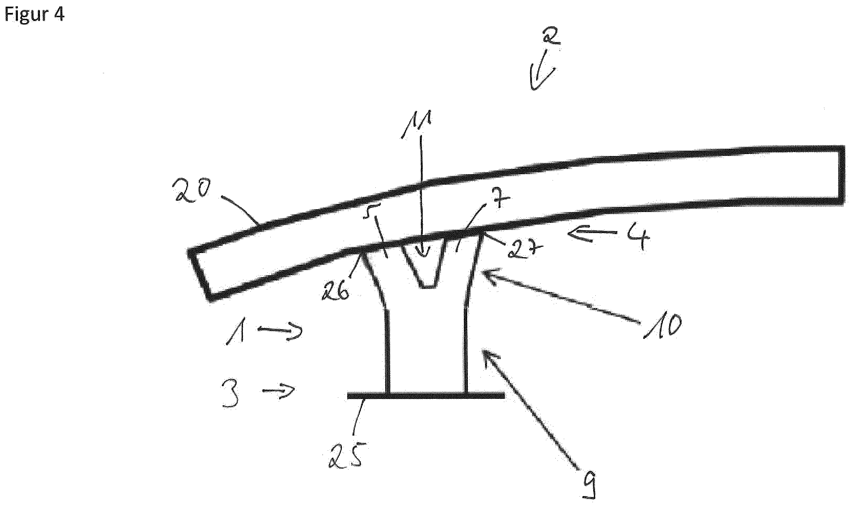

Die Figur 4 zeigt eine Ansicht von oben auf ein schematisches Ausführungsbeispiel einer erfindungsgemäßen Stoßfängeranordnung 2 mit einem Querträger 20, der mit einer erfindungsgemäßen Crashbox 1 an deren stoßfängerseitigem Ende 3 mit der inneren Hohlkammer 7 und der äußeren Hohlkammer 5 über Schweißnähte 27 und 26 gefügt ist. Am fahrzeugseitigen Ende 3 ist die Crashbox 1 mit einem Längsträger 25 eines Kraftfahrzeuges ebenfalls gefügt, insbesondere verschraubt oder verschweißt.

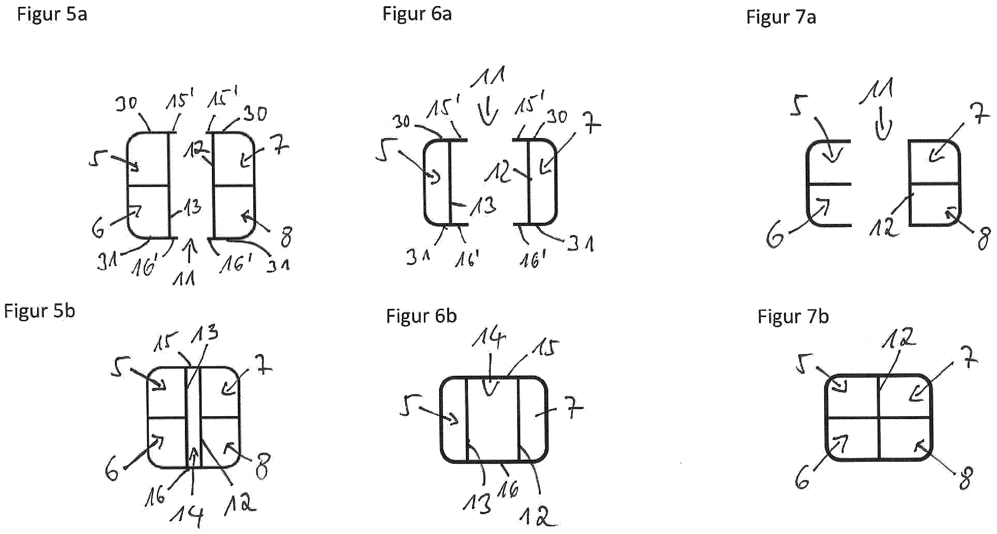

Die Figur 5a zeigt eine Querschnittdarstellung eines Frontabschnitts 10 eines Ausführungsbeispiels einer erfindungsgemäßen Crashbox 1 während die Figur 5b den Querschnitt eines Endabschnittes 9 dieses Ausführungsbeispiels zeigt. Dabei ist zu erkennen, dass in diesem Ausführungsbeispiel zwei geschlossene innere Hohlkammern 7 und 8 und zwei geschlossenen Hohlkammern 5 und 6 vorhanden sind. In der Figur 5a ist dabei der Schlitz 11 im Frontabschnitt 10 zu erkennen, durch welchen die inneren Hohlkammern 7 und 8 von den äußeren Hohlkammern 5 und 6 getrennt und beabstandet sind. Die inneren Hohlkammern 7 und 8 weisen dabei eine gemeinsame innere Trennwand 12 auf, die in Richtung einer gemeinsamen inneren Trennwand 13 der äußeren Hohlkammern 5 und 6 weist.

In der Figur 5b ist nunmehr zu erkennen, dass die beiden inneren Hohlkammern 7 und 8 über einen oberen Steg 15 und einen unteren Steg 14 mit den äußeren Hohlkammern 5 und 6 im fahrzeugseitigen Endbereich 9 verbunden sind. Dabei bilden der obere Steg 15 und der untere Steg 16 zusammen mit dem oberen Steg 15 und dem unteren Steg 16 eine weitere Hohlkammer 14, die zwischen den äußeren Hohlkammern 5 und 6 und den inneren Hohlkammern 7 und 8 angeordnet ist.

Ferner sind in Figur 5a Stege 15' und 16' angezogen, die durch Bildung des Schlitzes 11 aus den in Figur 5b angezogenen Stegen 15 und 16 hervorgegangen sind und welche obere Begrenzungswände 30 der Hohlkammern 5 und 7 beziehungsweise untere Begrenzungswände 31 der Hohlkammern 6 und 8 fortsetzen. In diese Stege 15' und 16' können hier nicht angezogene Sicken eingebracht sein, die sich in die Trennwände 12 und 13 sowie die oberen und unteren Begrenzungswände 30 und 31 fortsetzen.

Die Figuren 6a und 6b zeigen ein weiteres Ausführungsbeispiel einer erfindungsgemäßen Querbox 1, wobei die Figur 6a den Querschnitt eines Frontabschnitts 10 und die Figur 6b den Querschnitt eines Endabschnitts 9 zeigt. Bei diesem Ausführungsbeispiel sind entsprechend dem Ausführungsbeispiel der Figuren 1 und 2 nur eine innere Hohlkammer 7 und eine äußere Hohlkammer 5 vorgesehen. In dem in Figur 6a dargestellten Querschnitt im Frontbereich 10 sind die inneren Hohlkammer 7 und die äußere Hohlkammer 5 wiederum durch einen Schlitz 11 voneinander beabstandet und getrennt. Die Hohlkammern 5 und 7 sind auch in diesem Ausführungsbeispiel über ihre gesamte Längserstreckung geschlossen ausgebildet, sodass deren inneren Trennwände 12 und 13 zueinander weisen.

Im Endabschnitt 9, wie er in der Figur 6a im Querschnitt dargestellt ist, sind die innere Hohlkammer 7 und die äußere Hohlkammer 5 wiederum über einen oberen Steg 15 und einen unteren Steg 16 miteinander verbunden. Auch in diesem Ausführungsbeispiel bilden der obere Steg 15 und der untere Steg 16 zusammen mit den inneren Trennwänden 12 und 13 der inneren Hohlkammer 7 und der äußeren Hohlkammer 5 eine weitere Hohlkammer 14.

Analog zu dem Ausführungsbeispiel der Figuren 5a und 5b sind in Figur 6a Stege 15' und 16' angezogen, die durch Bildung des Schlitzes 11 aus den in Figur 6b angezogenen Stegen 15 und 16 hervorgegangen sind und welche obere Begrenzungswände 30 der Hohlkammern 5 und 7 beziehungsweise untere Begrenzungswände 31 der Hohlkammern 5 und 7 fortsetzen. In diese Stege 15' und 16' können hier nicht angezogene Sicken eingebracht sein, die sich in die Trennwände 12 und 13 sowie die oberen und unteren Begrenzungswände 30 und 31 fortsetzen.

Ein weiteres Ausführungsbeispiel einer erfindungsgemäßen Crashbox 1 ist in den Figuren 7a und 7b im Querschnitt dargestellt. Dabei zeigt die Figur 7a wiederum den Querschnitt in einem Frontbereich 10 der Crashbox 1, während die Figur 7 den Querschnitt in einem Endbereich 9 der Crashbox 1 zeigt. Wie aus der Figur 7b zu entnehmen ist, weist diese Crashbox 1 wiederum zwei äußere Hohlkammern 5 und 6 und zwei inneren Hohlkammern 7 und 8 auf. In diesem Ausführungsbeispiel weisen die äußeren Hohlkammern 5 und 6 eine gemeinsame Trennwand 12 mit den inneren Hohlkammern 7 und 8 auf. Hieraus folgt, dass dieses Ausführungsbeispiel einer erfindungsgemäßen Crashbox ohne eine weitere Hohlkammer 14 auskommt, wie sie bei den Ausführungsbeispielen der Figuren 5b und 6b gegeben ist.

Im Frontabschnitt 10, wie er in der Figur 7a im Querschnitt dargestellt ist, sind die äußeren Hohlkammern 5 und 6 nunmehr offen zu den inneren Hohlkammern 7 und 8 ausgebildet, aber ebenfalls durch einen Schlitz 11 von diesem getrennt und beabstandet. Die inneren Hohlkammern 7 und 8 sind in diesem Ausführungsbeispiel als geschlossene Hohlkammern 7 und 8 ausgebildet, wobei sie zu den äußeren offenen Hohlkammern 5 und 6 die Trennwand 12 als Abschluss aufweisen.

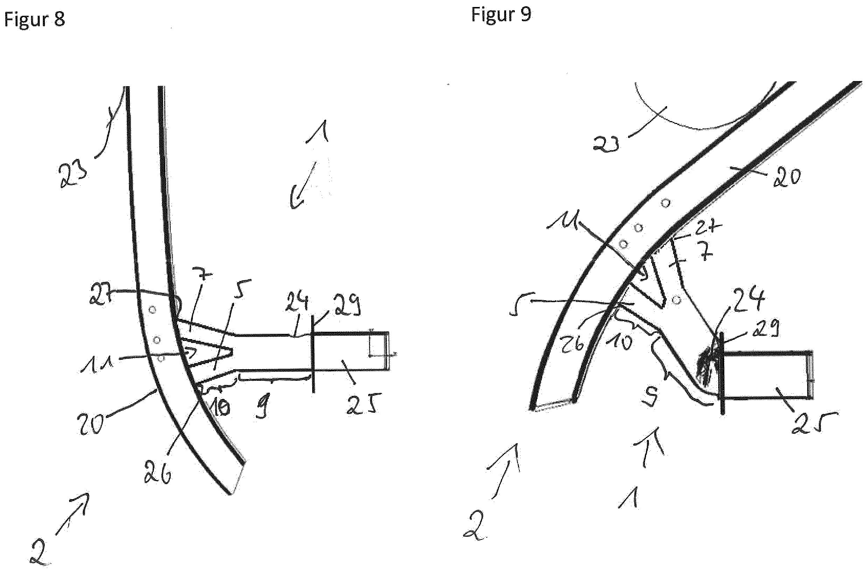

Die Figur 8 zeigt nunmehr eine erfindungsgemäße Stoßfängeranordnung 2 in einer Ansicht von oben auf ihr linkes Ende zu Beginn eines Center-Pole-Aufpralls zwischen den beiden Crashboxen 1 der Stoßfängeranordnung 2. Hierbei ist zu erkennen, dass zwischen den beiden Crashboxen 1 ein Querträger 20 der Stoßfängeranordnung 2 von einem Hindernis 23 getroffen wird.

In der Darstellung der Figur 8 hat noch keine Krafteinwirkung in die Stoßfängeranordnung 2 durch das Hindernis 23 stattgefunden, sodass die Crashboxen 1 noch ihre unveränderte Anordnung zum Querträger 20 der Stoßfängeranordnung 2 aufweisen, wobei in diesem Ausführungsbeispiel eine geschlossene innere Hohlkammer 7 und eine geschlossenes äußere Hohlkammer 5 vorgesehen ist. Die durch einen Schlitz 11 voneinander getrennte und beabstandete innere Hohlkammer 7 und äußere Hohlkammer 5 sind über ihre Schweißverbindungen 26 und 27 im Frontbereich 10 mit dem Querträger 20 der Stoßfängeranordnung 2 stoffschlüssig verbunden.

Im Endabschnitt 9 der Crashbox 1, die über Flanschplatten 29 mit einem Längsträger 25 eines Kraftfahrzeuges gefügt ist, weist im Bereich der inneren Hohlkammer auf dessen Außenseite zur Mitte der Stoßfängeranordnung hinweisenden Außenwand eine Solldeformationsstelle 24 auf.

In der Figur 9 ist nunmehr das Ausführungsbeispiel einer erfindungsgemäßen Stoßfängeranordnung 2 der Figur 8 in einer Ansicht von oben auf ihr linkes Ende während eines Center-Pole-Aufpralls zwischen den beiden Crashboxen 1 der Stoßfängeranordnung 2 gezeigt. Wie zu erkennen ist, hat im Bereich der Solldeformationsstelle 24 eine gezielte Faltung der Crashbox 1 in ihrem Endbereich 9 stattgefunden, wobei die stoffschlüssigen Verbindungen über die Schweißnähte 26 und 27 der äußeren Hohlkammer 5 und der inneren Hohlkammer 7 im Frontbereich 10 der Crashbox 1 unbeschädigt geblieben sind. Dadurch das die Schweißnähte durch die erfindungsgemäße Ausgestaltung der Crashbox 1 einen deutlich breiteren Angriffspunkt am Querträger 20 der Stoßfängeranordnung 2 aufweisen, verteilt sich die in den Querträger 20 eingebrachte Energie auf einen größeren Bereich, in dem die Energie in die Crashbox eingebracht wird, wobei im Crashfall auch die Kräfteverteilung auf einen größeren Bereich des Querträgers stattfindet, sodass die Wahrscheinlichkeit eines Versagens der Schweißverbindung in Folge von einem Reißen der Schweißnähte 26 und 27 deutlich minimiert ist.

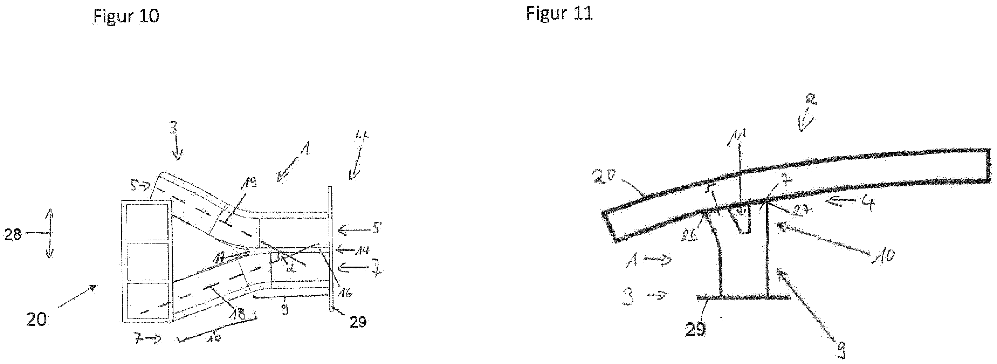

Figur 10 zeigt eine zu den vorherigen Ausführungsformen um 90° gedrehte Einbaulage einer erfindungsgemäßen Crashbox 1 im Kraftfahrzeug, wobei die inneren und äußeren Hohlkammern 5, 7 am querträgerseitigen Frontabschnitt 10 nicht in Fahrzeugquerrichtung 22 voneinander beanstandet sind, sondern in Fahrzeughochrichtung 28, so dass ein zum Querträger 20 verlaufender größer werdender Abstand zwischen den Hohlkammern 5 und 7 ausgebildet ist.

Figur 11 zeigt im Unterschied zur Ausführungsform der Figur 4, dass nur eine der Hohlkammern, und zwar die äußere Hohlkammer 5 im querträgerseitigen Endabschnitt 9 geneigt beziehungsweise angebogen ausgebildet ist, während die innere Hohlkammer 7 im Wesentlichen durchgehend gradlinig zwischen beiden Crashboxenden verläuft.

In den Ausführungsbeispielen der Figuren 10 und 11 ist am Ende des fahrzeugseitigen Endabschnitts 9 jeweils eine Flanschplatte 29 angeordnet, um die Crashbox 1 mit einem Fahrzeuglängsträger zu verbinden insbesondere mit einer an einem Fahrzeuglängsträger angeordneten Flanschplatte zu verschrauben.

### Bezugszeichenliste

- 1: Crashbox
- 2: Stoßfängeranordnung
- 3: stoßfängerseitiges Ende
- 4: fahrzeugseitiges Ende
- 5: Hohlkammer
- 6: Hohlkammer
- 7: Hohlkammer
- 8: Hohlkammer
- 9: Endabschnitt
- 10: Frontabschnitt
- 11: Schlitz
- 12: Trennwand
- 13: Trennwand
- 14: Hohlkammer
- 15: oberer Steg
- 15': Steg
- 16: unterer Steg
- 16': Steg'
- 17: Radius
- 18: Längsachse
- 19: Längsachse
- 20: Querträger
- 21: Mehrkammerhohlprofilen
- 22: horizontalen Richtung
- 23: Hindernis
- 24: Solldeformationsstelle
- 25: Längsträger
- 26: Schweißnaht
- 27: Schweißnaht
- 28: Vertikale Richtung / Fahrzeughochrichtung
- 29: Flanschplatte
- 30: Begrenzungswand
- 31: Begrenzungswand
- α: Winkel

## Patentansprüche

1. Crashbox (1) für eine Stoßfängeranordnung (2) eines Kraftfahrzeuges, wobei die Crashbox (1) wenigstens eine äußere Hohlkammer (5, 6) und wenigstens eine innere Hohlkammer (7, 8) und einen fahrzeugseitigen Endabschnitt (9) und einen stoßfängerseitigen Frontabschnitt (10) aufweist, wobei im fahrzeugseitigen Endabschnitt (9) die wenigstens eine äußere Hohlkammer (5, 6) mit der wenigstens einen inneren Hohlkammer (7, 8) verbunden ist und ein geschlossenes Mehrkammerprofil bildet, während im stoßfängerseitigen Frontabschnitt (10) die wenigstens eine äußere Hohlkammer (5, 6) von der wenigstens einen inneren Hohlkammer (7, 8) getrennt und beabstandet ist, **dadurch gekennzeichnet, dass** im Endabschnitt (9) die wenigstens eine äußere Hohlkammer (5, 6) und die wenigstens eine innere Hohlkammer (7, 8) jeweils eine Trennwand (12, 13) aufweisen, welche die wenigstens eine äußere Hohlkammer (5, 6) und die wenigstens eine innere Hohlkammer (7, 8) innenseitig begrenzen, wobei diese Trennwände (12. 13) vorzugsweise voneinander beabstandet sind und mit einem die wenigstens eine äußere Hohlkammer (5, 6) und die wenigstens eine innere Hohlkammer (7, 8) verbindenden oberen Steg (15) und unteren Steg (16) eine weitere Hohlkammer (14) im Endbereich (9) bilden.

2. Crashbox nach Anspruch 1, **dadurch gekennzeichnet, dass** im fahrzeugseitigen Endabschnitt (9) die wenigstens eine äußere Hohlkammer (5, 6) in einer horizontalen Richtung (22) oder einer vertikalen Richtung (28) mit der wenigstens einen inneren Hohlkammer (7, 8) verbunden ist und ein geschlossenes Mehrkammerprofil bildet, während im stoßfängerseitigen Frontabschnitt (10) die wenigstens eine äußere Hohlkammer (5, 6) von der wenigstens einen inneren Hohlkammer (7, 8) in der horizontalen Richtung (22) oder einer vertikalen Richtung (28) getrennt und beabstandet ist.

3. Crashbox nach Anspruch 1 oder 2, **dadurch gekennzeichnet, dass** die Hohlkammern (5, 6, 7, 8) über ihre gesamte Längserstreckung von einem stoßfängerseitigen Ende (3) bis zu einem fahrzeugseitigen Ende (4) geschlossenen ausgebildet sind.

4. Crashbox nach Anspruch 1 oder 2, **dadurch gekennzeichnet, dass** die wenigstens eine äußere Hohlkammer (5, 6) oder die wenigstens eine innere Hohlkammer (7, 8) über ihre Längserstreckung im Frontabschnitt (10) offen, vorzugsweise zur jeweils wenigstens einer anderen Hohlkammer (7, 8; 5, 6) offen ausgebildet sind.

5. Crashbox nach einem der vorhergehenden Ansprüche, **dadurch gekennzeichnet, dass** die wenigstens eine äußere Hohlkammer (5, 6) im Frontabschnitt (10) eine Längsachse (18) aufweist, welche zu einer Längsachse (19) der wenigstens einen inneren Hohlkammer (7, 8) einen Winkel α kleiner 40° bildet, wobei der Winkel α vorzugsweise größer 3° ausgebildet ist.

6. Crashbox nach einem der vorhergehenden Ansprüche, **dadurch gekennzeichnet, dass** im Frontabschnitt (10) die wenigstens eine äußere Hohlkammer (5, 6) und die wenigstens eine innere Hohlkammer (7, 8) einen zum stoßfängerseitigen Ende (3) kontinuierlich wachsenden Abstand aufweisen.

7. Crashbox nach einem der vorhergehenden Ansprüche, **dadurch gekennzeichnet, dass** sich der Frontabschnitt (10) über 1/5 bis 2/3 der Gesamtlänge der Crashbox (1) erstreckt.

8. Crashbox nach einem der vorhergehenden Ansprüche, **dadurch gekennzeichnet, dass** im Frontabschnitt (10) die wenigstens eine äußere Hohlkammer (5, 6) von der wenigstens einen inneren Hohlkammer (7, 8) durch einen Schlitz (11) beabstandet ist, welcher vorzugsweise zum Endabschnitt (9) abgerundet, insbesondere durch einen Radius (17) abgerundet ausgebildet ist, wobei dieser Radius (17) mindestens der Wanddicke der Hohlkammern (5, 6, 7, 8) im Endabschnitt (9) entspricht.

9. Crashbox nach einem der vorhergehenden Ansprüche, **dadurch gekennzeichnet, dass** im Frontabschnitt (10) an den Hohlkammern (5, 6, 7, 8) Stege (15', 16') angeordnet sind, in welche Sicken als Deformationselemente angeordnet sind, wobei sich diese Sicken vorzugsweise in die Trennwände (12, 13) sowie obere und/oder untere Begrenzungswände (30, 31) der Hohlkammern (5, 6, 7, 8) fortsetzen.

10. Crashbox nach einem der vorhergehenden Ansprüche, **dadurch gekennzeichnet, dass** die Hohlkammern (5, 6, 7, 8) über Ihre gesamte Längserstreckung vom fahrzeugseitigen Ende (4) bis zum stoßfängerseitigen Ende (3) jede für sich eine konstante Breite von mindestens 20mm aufweisen.

11. Stoßfängeranordnung (2) eines Kraftfahrzeuges mit zwei Crashboxen (1) nach einem der vorhergehenden Ansprüche mit wenigstens einem Querträger (20), über welchen die beiden Crashboxen (1) miteinander verbunden sind.

12. Stoßfängeranordnung (2) nach Anspruch 11, **dadurch gekennzeichnet, dass**
a) die wenigstens eine äußere Hohlkammer (5, 6) näher an einem Ende des wenigstens einen Querträgers (20) angeordnet ist als die wenigstens eine innere Hohlkammer (7, 8) oder
b) die wenigsten eine äußere Hohlkammern (5, 6) der Crashboxen (1) oberhalb der wenigstens einen inneren Hohlkammern (7, 8) angeordnet ist.

13. Stoßfängeranordnung (2) nach Anspruch 11, **dadurch gekennzeichnet, dass** der wenigstens eine Querträger (20) eine Höhe aufweist, die größer ist als eine Querschnittshöhe des Fahrzeugendabschnitts der Crashboxen (1), wobei die wenigstens eine äußere Hohlkammer (5, 6) der Crashboxen (1) oberhalb der wenigstens einen inneren Hohlkammer (7, 8) angeordnet ist und sich an einem oberen Befestigungsbereich des wenigstens einen Querträgers (20) abstützt, während die wenigstens eine innere Hohlkammer (7,8) sich an einen unteren Befestigungsbereich des wenigstens einen Querträgers (20) abstützt.

14. Stoßfängeranordnung nach Anspruch 11, **dadurch gekennzeichnet, dass** die Crashboxen (1) mit dem wenigstens einen Querträger (20) gefügt, vorzugsweise verschraubt oder stoffschlüssig gefügt, insbesondere verschweißt sind.

15. Verfahren zur Herstellung einer Stoßfängeranordnung nach einem der Ansprüche 11 bis 14 mit zwei Crashboxen (1) nach einem der Ansprüche 1 bis 10 mit folgenden Verfahrensschritten:
a) Bereitstellen von zwei Mehrkammerhohlprofilen (21) mit wenigstens einer äußeren Hohlkammer (5, 6) und wenigstens einer inneren Hohlkammer (7, 8),
b) Einbringen eines Schlitzes (11) in einen Frontabschnitt (10) der Mehrkammerhohlprofile (30) zur Trennung und Beabstandung der wenigstens einen äußeren Hohlkammer (5, 6) von der wenigstens einer inneren Hohlkammer (7, 8) und Herstellung zweier Crashboxen,
c) Bereitstellung von zwei Crashboxen (1) nach einem der Ansprüche 1 bis 10,
d) Fügen der beiden Crashboxen (1) mit dem wenigstens einem Querträger (20).

## Claims

1. Crash box (1) for a bumper arrangement (2) of a motor vehicle, wherein the crash box (1) comprises at least one outer hollow chamber (5, 6) and at least one inner hollow chamber (7, 8), as well as a vehicle-side end section (9) and a bumper-side front section (10), wherein in the vehicle-side end section (9) the at least one outer hollow chamber (5, 6) is connected to the at least one inner hollow chamber (7, 8) and forms a closed multi-chamber profile, while in the bumper-side front section (10) the at least one outer hollow chamber (5, 6) is separated and spaced apart from the at least one inner hollow chamber (7, 8), **characterized in that** in the end section (9) the at least one outer hollow chamber (5, 6) and the at least one inner hollow chamber (7, 8) each comprise a partition wall (12, 13) which internally bounds the at least one outer hollow chamber (5, 6) and the at least one inner hollow chamber (7, 8), wherein these partition walls (12, 13) are preferably spaced apart from one another and, together with an upper web (15) and a lower web (16) connecting the at least one outer hollow chamber (5, 6) and the at least one inner hollow chamber (7, 8), form a further hollow chamber (14) in the end region (9).

2. Crash box according to claim 1, **characterized in that** in the vehicle-side end section (9) the at least one outer hollow chamber (5, 6) is connected to the at least one inner hollow chamber (7, 8) in a horizontal direction (22) or a vertical direction (28) and forms a closed multi-chamber profile, while in the bumper-side front section (10) the at least one outer hollow chamber (5, 6) is separated and spaced apart from the at least one inner hollow chamber (7, 8) in the horizontal direction (22) or a vertical direction (28).

3. Crash box according to claim 1 or 2, **characterized in that** the hollow chambers (5, 6, 7, 8) are formed as closed over their entire longitudinal extent from a bumper-side end (3) to a vehicle-side end (4).

4. Crash box according to claim 1 or 2, **characterized in that** the at least one outer hollow chamber (5, 6) or the at least one inner hollow chamber (7, 8) is formed to be open over its longitudinal extent in the front section (10), preferably open toward the respective at least one other hollow chamber (7, 8; 5, 6).

5. Crash box according to one of the preceding claims, **characterized in that** the at least one outer hollow chamber (5, 6) in the front section (10) has a longitudinal axis (18) which forms an angle α of less than 40° with a longitudinal axis (19) of the at least one inner hollow chamber (7, 8), wherein the angle α is preferably greater than 3°.

6. Crash box according to one of the preceding claims, **characterized in that** in the front section (10) the at least one outer hollow chamber (5, 6) and the at least one inner hollow chamber (7, 8) have a spacing that increases continuously toward the bumper-side end (3).

7. Crash box according to one of the preceding claims, **characterized in that** the front section (10) extends over 1/5 to 2/3 of the total length of the crash box (1).

8. Crash box according to one of the preceding claims, **characterized in that** in the front section (10) the at least one outer hollow chamber (5, 6) is spaced apart from the at least one inner hollow chamber (7, 8) by a slot (11), which is preferably rounded toward the end section (9), in particular formed with a radius (17), wherein this radius (17) corresponds at least to the wall thickness of the hollow chambers (5, 6, 7, 8) in the end section (9).

9. Crash box according to one of the preceding claims, **characterized in that** in the front section (10) webs (15', 16') are arranged on the hollow chambers (5, 6, 7, 8), in which beads serving as deformation elements are provided, wherein these beads preferably extend into the partition walls (12, 13) as well as into upper and/or lower boundary walls (30, 31) of the hollow chambers (5, 6, 7, 8).

10. Crash box according to one of the preceding claims, **characterized in that** the hollow chambers (5, 6, 7, 8) each have a constant width of at least 20 mm over their entire longitudinal extent from the vehicle-side end (4) to the bumper-side end (3).

11. Bumper arrangement (2) of a motor vehicle comprising two crash boxes (1) according to one of the preceding claims and at least one crossmember (20), via which the two crash boxes (1) are connected to one another.

12. Bumper arrangement (2) according to claim 11, **characterized in that**
a) the at least one outer hollow chamber (5, 6) is arranged closer to one end of the at least one crossmember (20) than the at least one inner hollow chamber (7, 8), or
b) the at least one outer hollow chambers (5, 6) of the crash boxes (1) are arranged above the at least one inner hollow chambers (7, 8).

13. Bumper arrangement (2) according to claim 11, **characterized in that** the at least one crossmember (20) has a height that is greater than a cross-sectional height of the vehicle-side end section of the crash boxes (1), wherein the at least one outer hollow chamber (5, 6) of the crash boxes (1) is arranged above the at least one inner hollow chamber (7, 8) and is supported on an upper mounting region of the at least one crossmember (20), while the at least one inner hollow chamber (7, 8) is supported on a lower mounting region of the at least one crossmember (20).

14. Bumper arrangement according to claim 11, **characterized in that** the crash boxes (1) are joined to the at least one crossmember (20), preferably by screwing or by material bonding, in particular by welding.

15. Verfahren zur Herstellung einer Stoßfängeranordnung nach einem der Ansprüche 11 bis 14 mit zwei Crashboxen (1) nach einem der Ansprüche 1 bis 10 mit folgenden Verfahrensschritten:
a) Bereitstellen von zwei Mehrkammerhohlprofilen (21) mit wenigstens einer äußeren Hohlkammer (5, 6) und wenigstens einer inneren Hohlkammer (7, 8),
b) Einbringen eines Schlitzes (11) in einen Frontabschnitt (10) der Mehrkammerhohlprofile (30) zur Trennung und Beabstandung der wenigstens einen äußeren Hohlkammer (5, 6) von der wenigstens einer inneren Hohlkammer (7, 8) und Herstellungzweier Crashboxen,
c) Bereitstellung von zwei Crashboxen (1) nach einem der Ansprüche 1 bis 10, d) Fügen der beiden Crashboxen (1) mit dem wenigstens einem Querträger (20).

## Revendications

1. Boîte d'absorption de choc (1) pour un ensemble de pare-chocs (2) d'un véhicule automobile, ladite boîte d'absorption de choc (1) comprenant au moins une chambre creuse extérieure (5, 6) et au moins une chambre creuse intérieure (7, 8), ainsi qu'une section d'extrémité côté véhicule (9) et une section frontale côté pare-chocs (10), dans laquelle, dans la section d'extrémité côté véhicule (9), la au moins une chambre creuse extérieure (5, 6) est reliée à la au moins une chambre creuse intérieure (7, 8) et forme un profilé multicellulaire fermé, tandis que, dans la section frontale côté pare-chocs (10), la au moins une chambre creuse extérieure (5, 6) est séparée et espacée de la au moins une chambre creuse intérieure (7, 8), **caractérisée en ce que**, dans la section d'extrémité (9), la au moins une chambre creuse extérieure (5, 6) et la au moins une chambre creuse intérieure (7, 8) comportent chacune une paroi de séparation (12, 13) qui délimite intérieurement lesdites chambres creuses, ces parois de séparation (12, 13) étant de préférence espacées l'une de l'autre et formant, avec une nervure supérieure (15) et une nervure inférieure (16) reliant la au moins une chambre creuse extérieure (5, 6) et la au moins une chambre creuse intérieure (7, 8), une chambre creuse supplémentaire (14) dans la zone d'extrémité (9).

2. Boîte d'absorption de choc selon la revendication 1, **caractérisée en ce que**, dans la section d'extrémité côté véhicule (9), la au moins une chambre creuse extérieure (5, 6) est reliée à la au moins une chambre creuse intérieure (7, 8) dans une direction horizontale (22) ou verticale (28) et forme un profilé multicellulaire fermé, tandis que, dans la section frontale côté pare-chocs (10), la au moins une chambre creuse extérieure (5, 6) est séparée et espacée de la au moins une chambre creuse intérieure (7, 8) dans la direction horizontale (22) ou verticale (28).

3. Boîte d'absorption de choc selon la revendication 1 ou 2, **caractérisée en ce que** les chambres creuses (5, 6, 7, 8) sont réalisées fermées sur toute leur longueur, depuis une extrémité côté pare-chocs (3) jusqu'à une extrémité côté véhicule (4).

4. Boîte d'absorption de choc selon la revendication 1 ou 2, **caractérisée en ce que** la au moins une chambre creuse extérieure (5, 6) ou la au moins une chambre creuse intérieure (7, 8) est réalisée ouverte sur sa longueur dans la section frontale (10), de préférence ouverte vers la au moins une autre chambre creuse correspondante (7, 8; 5, 6).

5. Boîte d'absorption de choc selon l'une des revendications précédentes, **caractérisée en ce que** la au moins une chambre creuse extérieure (5, 6) présente, dans la section frontale (10), un axe longitudinal (18) formant avec un axe longitudinal (19) de la au moins une chambre creuse intérieure (7, 8) un angle α inférieur à 40°, cet angle α étant de préférence supérieur à 3°.

6. Boîte d'absorption de choc selon l'une des revendications précédentes, **caractérisée en ce que**, dans la section frontale (10), la au moins une chambre creuse extérieure (5, 6) et la au moins une chambre creuse intérieure (7, 8) présentent un écartement augmentant continuellement en direction de l'extrémité côté pare-chocs (3).

7. Boîte d'absorption de choc selon l'une des revendications précédentes, **caractérisée en ce que** la section frontale (10) s'étend sur 1/5 à 2/3 de la longueur totale de la boîte d'absorption de choc (1).

8. Boîte d'absorption de choc selon l'une des revendications précédentes, **caractérisée en ce que**, dans la section frontale (10), la au moins une chambre creuse extérieure (5, 6) est espacée de la au moins une chambre creuse intérieure (7, 8) par une fente (11), laquelle est de préférence arrondie vers la section d'extrémité (9), notamment au moyen d'un rayon (17), ce rayon (17) étant au moins égal à l'épaisseur de paroi des chambres creuses (5, 6, 7, 8) dans la section d'extrémité (9).

9. Boîte d'absorption de choc selon l'une des revendications précédentes, **caractérisée en ce que**, dans la section frontale (10), des nervures (15', 16') sont disposées sur les chambres creuses (5, 6, 7, 8), dans lesquelles sont formées des stries servant d'éléments de déformation, ces stries se prolongeant de préférence dans les parois de séparation (12, 13) ainsi que dans des parois de délimitation supérieure et/ou inférieure (30, 31) des chambres creuses (5, 6, 7, 8).

10. Boîte d'absorption de choc selon l'une des revendications précédentes, **caractérisée en ce que** les chambres creuses (5, 6, 7, 8) présentent chacune une largeur constante d'au moins 20 mm sur toute leur longueur, depuis l'extrémité côté véhicule (4) jusqu'à l'extrémité côté pare-chocs (3).

11. Ensemble de pare-chocs (2) d'un véhicule automobile comprenant deux boîtes d'absorption de choc (1) selon l'une des revendications précédentes et au moins une traverse (20) par l'intermédiaire de laquelle les deux boîtes d'absorption de choc (1) sont reliées entre elles.

12. Ensemble de pare-chocs (2) selon la revendication 11, **caractérisé en ce que**
a) la au moins une chambre creuse extérieure (5, 6) est disposée plus près d'une extrémité de la au moins une traverse (20) que la au moins une chambre creuse intérieure (7, 8), ou
b) la au moins une chambre creuse extérieure (5, 6) des boîtes d'absorption de choc (1) est disposée au-dessus de la au moins une chambre creuse intérieure (7, 8).

13. Ensemble de pare-chocs (2) selon la revendication 11, **caractérisé en ce que** la au moins une traverse (20) présente une hauteur supérieure à une hauteur de section transversale de la section d'extrémité côté véhicule des boîtes d'absorption de choc (1), la au moins une chambre creuse extérieure (5, 6) des boîtes d'absorption de choc (1) étant disposée au-dessus de la au moins une chambre creuse intérieure (7, 8) et prenant appui sur une zone de fixation supérieure de la au moins une traverse (20), tandis que la au moins une chambre creuse intérieure (7, 8) prend appui sur une zone de fixation inférieure de la au moins une traverse (20).

14. Ensemble de pare-chocs selon la revendication 11, **caractérisé en ce que** les boîtes d'absorption de choc (1) sont assemblées à la au moins une traverse (20), de préférence par vissage ou par liaison matière, en particulier par soudage.

15. Procédé de fabrication d'un ensemble de pare-chocs selon l'une des revendications 11 à 14, comprenant deux boîtes d'absorption de choc (1) selon l'une des revendications 1 à 10, comportant les étapes suivantes:
a) fourniture de deux profilés creux multicellulaires (21) comprenant au moins une chambre creuse extérieure (5, 6) et au moins une chambre creuse intérieure (7, 8),
b) réalisation d'une fente (11) dans une section frontale (10) des profilés creux multicellulaires (30) afin de séparer et d'écarter la au moins une chambre creuse extérieure (5, 6) de la au moins une chambre creuse intérieure (7, 8) et de former deux boîtes d'absorption de choc,
c) mise à disposition de deux boîtes d'absorption de choc (1) selon l'une des revendications 1 à 10,
d) assemblage des deux boîtes d'absorption de choc (1) avec la au moins une traverse (20).
